# EUROPÄISCHE PATENTSCHRIFT

(11) **EP 1 227 690 B1**
(45) Veröffentlichungstag und Bekanntmachung des Hinweises auf die Patenterteilung: **01.12.2004**
(21) Anmeldenummer: 01810062.8
(22) Anmeldetag: 24.01.2001
(51) Int. Cl.: H04Q 7/32, H04M 1/725

(54) **Verfahren zu Übertragung von Betriebsdaten an Mobilfunkendgeräte eines schnurlosen Telekommunikationssystems und Nebenstellenanlage dafür**
Method for transmission of operating data to mobile terminals of a cordless communication system and private branch exchange therefor
Procédé de transmission des données de fonctionnement vers des terminaux mobiles d'un système de communication sans fil et autocommutateur privé correspondant

(43) Veröffentlichungstag der Anmeldung: 31.07.2002
(73) Patentinhaber: Aastra Technologies Limited, Concord, Ontario L4K 4N9 (CA)
(72) Erfinder: Schärer, Frank, 3425 Koppigen (CH); Watson, Mark, 4500 Solothurn (CH); Trüb, Heinz, 4500 Solothurn (CH)
(74) Vertreter: Rutz, Peter

(56) Entgegenhaltungen:
- EP-A- 0 767 426
- EP-A- 0 804 046
- EP-A- 0 959 635
- WO-A-97/16938
- WO-A-98/41044
- DE-A- 19 930 170

## Beschreibung

Die Erfindung betrifft ein Verfahren zur Übertragung von Betriebsprogrammen an Mobilfunkendgeräte eines schnurlosen Telekommunikationssystems nach dem Oberbegriff des Patentanspruchs 1 sowie eine entsprechende private Nebenstellenanlage nach dem Oberbegriff des Patentanspruchs 8.

Mobilfunksysteme der zweiten Generation, wie sie in [1], Jerry D. Gibson, THE COMMUNICATIONS HANDBOOK, CRC PRESS, Boca Raton 1997, Kapitel 86, 1208-1225 beschrieben sind, umfassen Mobilfunkendgeräte mit Speichereinheiten, in denen entsprechend der Protokollarchitektur dieser Mobilfunksysteme arbeitende Betriebsprogramme und weitere Daten abgelegt sind.

Aufgrund der permanenten Weiterentwicklung dieser Systeme, beispielsweise zur Behebung von Mängeln oder zur Einführung neuer Leistungsmerkmale, sind diese Betriebsprogramme häufig durch neuere Versionen zu ersetzen.

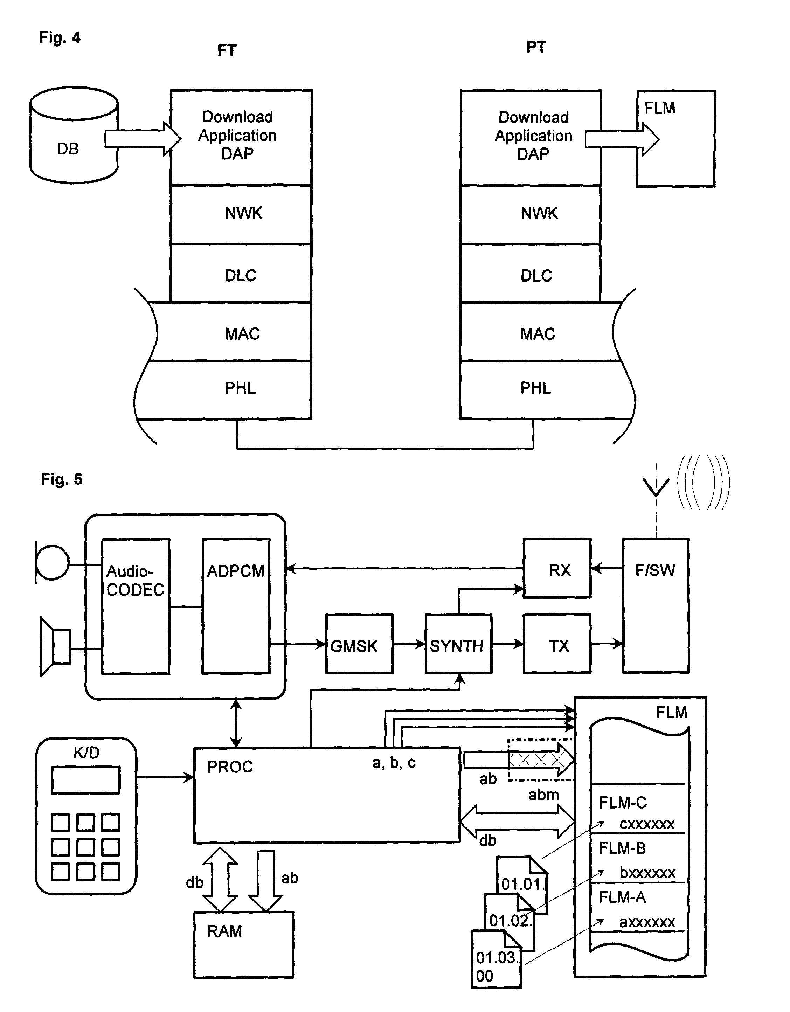

Aus [2], Offenlegungsschrift EP 0 459 344 A1 sowie [3], Offenlegungsschrift EP 0 804 046 A2 ist bekannt, dass eine Übertragung von Betriebsdaten drahtlos und praktisch ohne Einschränkung der Verfügbarkeit der Mobilfunkendgeräte erfolgen kann. Dazu weisen bekannte Mobilfunkendgeräte (siehe [2], Fig. 3) wenigstens zwei voneinander getrennte, zur Aufnahme von Betriebsprogrammen vorgesehene Speichermodule auf, von denen jeweils eines für den Betrieb des Mobilfunkendgerätes verwendet wird. In das zweite Speichermodul kann weitgehend unabhängig von der gewählten Betriebsart (beispielsweise Sprechen oder Betriebsbereitschaft) ein neues Betriebsprogramm geladen werden.

Für den optimalen Betrieb eines schnurlosen Telekommunikationssystems, beispielsweise das in [1], Kapitel 92, Seiten 1305-1325 beschriebene DECT (Digital European Cordless Telecommunications) System, ist es von Bedeutung, dass die einer Vermittlungsstelle VST (einer privaten Nebenstellenanlage (Private Branch Exchange PBX) oder einer öffentlichen Teilnehmervermittlungsstelle) zugeordneten und sich dort anmeldenden Mobilfunkendgeräte einen möglichst einheitlichen Versionsstand der Betriebsprogramme aufweisen und daher jeweils innerhalb überblickbaren Zeiträumen aufdatiert werden.

Realisierungsmöglichkeiten von DECT-Systemen sind beispielsweise in [9], B. Walke, Mobilfunknetze und ihre Protokolle, Band 2, Kapitel 5, Seiten 107-115 beschrieben.

Zur Durchführung der in den DECT Protokollen festgelegten Verfahren sind erhebliche Ressourcen, insbesondere eine hohe Rechenleistung und hohe Kanalbandbreiten erforderlich. Zudem ist die Auslastung privater Vermittlungsstellen zeitweise derart hoch, so dass die Aufdatierung der Mobilfunkendgeräte ohne Betriebsbeeinträchtigungen kaum oder nur während einer relativ grossen Zeitperiode möglich ist.

Aus der Sicht der Anwender soll die Aufdatierung der Mobilfunkendgeräte jedoch ohne Betriebsbeeinträchtigungen und trotzdem möglichst rasch erfolgen um gegebenenfalls neu eingeführte Leistungsmerkmale rasch nutzen zu können. Der Benutzer soll daher unterbruchsfrei erreichbar sein oder Gesprächspartner erreichen können.

Der Betreiber des schnurlosen Telekommunikationssystems ist daran interessiert, dass nach der Initialisierung möglichst keine Interaktionen seinerseits für die Aufdatierung des Systems erforderlich sind. Nach der Einführung einer neuen Software für die Vermittlungsstelle sollen auch alle Mobilfunkendgeräte möglichst rasch auf einen dazu korrespondierenden Stand gebracht werden, so dass sich die gesamte Anlage immer auf dem aktuellen Stand befindet.

Für die Hersteller des schnurlosen Telekommunikationssystems ist wesentlich, dass keine Modifikationen der Geräte erforderlich sind. In WO 97/16938-A wird für zellulare Mobilfunknetze vorgeschlagen, eine Statustabelle zu führen, in der die Software versionen der Mobilendgerate registriert sind. Die Übertragung von Software erfolgt unmittelbar nach der Registrierung eines Mobilendgerätes, sofern dieses nicht die aktuelle Software aufweist. Dabei wird geprüft ob ein Nutzkanal frei ist.

Der vorliegenden Erfindung liegt daher die Aufgabe zugrunde, ein Verfahren zur Übertragung von Betriebsprogrammen an Mobilfunkendgeräte eines schnurlosen Telekommunikationssystems anzugeben, welches erlaubt, einer Nebenstellenanlage zugehörige Mobilfunkendgeräte innerhalb nützlicher Zeit auf einen vorgesehenen Versionsstand der Betriebsprogramme zu bringen, ohne dass Betriebsabläufe innerhalb der Nebenstellenanlage beeinträchtigt werden.

Ferner ist eine nach dem erfindungsgemässen Verfahren arbeitende Nebenstellenanlage anzugeben.

Diese Aufgabe wird mit einem Verfahren und einer Nebenstellenanlage gelöst, welche die in den Ansprüchen 1 und 8 angegebenen Merkmale aufweisen. Vorteilhafte Ausgestaltungen der Erfindung sind in weiteren Ansprüchen angegeben.

Das erfindungsgemässe Verfahren dient zur Übertragung von Betriebsprogrammen an Mobilfunkendgeräte eines schnurlosen Telekommunikationssystems, innerhalb dem mittels einer privaten Nebenstellenanlage Verbindungen zu den für den Empfang von Betriebsprogrammen vorgesehenen und gegebenenfalls zu weiteren Mobilfunkendgeräten aufgebaut werden können.

Erfindungsgemäss wird in der Nebenstellenanlage eine Statustabelle geführt, in der für den Empfang von Betriebsprogrammen vorgesehene Mobilfunkendgeräte sowie die zugehörige Version des aktiven und gegebenenfalls die Versionen eines oder mehrerer inaktiver Betriebsprogramme registriert sind. Nach einer Änderung der Version der Betriebsprogramme der Nebenstellenanlage und/oder der Mobilfunkendgeräte kann daher festgestellt werden, dass eine Aufdatierung der Mobilfunkendgeräte notwendig ist. Die Übertragung von Betriebsprogrammen zu einem von der Statustabelle ausgewählten Mobilfunkendgerät erfolgt jeweils nach Prüfung der Ressourcen der Nebenstellenanlage und der Verfügbarkeit eines Steuerkanals, über den die Betriebsprogramme zum Mobilfunkendgerät übertragen werden. Die Verwaltung der Statustabelle erfolgt vorzugsweise dynamisch. D.h. bei der Anmeldung eines Mobilfunkendgerätes wird geprüft, ob eine Aufdatierung notwendig ist. Sofern dies zutrifft, wird das Mobilfunkendgerät in die Statustabelle eingetragen und nach erfolgter Aufdatierung wieder gelöscht.

Durch diese Massnahmen wird sichergestellt, dass alle der Nebenstellenanlage zugeordneten Mobilfunkendgeräte systematisch erfasst und rasch auf den aktuellen Stand gebracht werden. Die Nebenstellenanlage, die über die Konfigurationsdaten der angemeldeten Mobilfunkendgeräte verfügt, kann zudem während Phasen, in denen beispielsweise Betriebsprogramme mit neuen Leistungsmerkmalen geladen werden, feststellen, bei welchen Mobilfunkendgeräten die neuen Leistungsmerkmale bereits eingesetzt werden können.

Erfindungsgemäss wird zudem darauf geachtet, dass die Übertragung von Betriebsprogrammen, die gleichzeitig zu mehreren Mobilfunkendgeräten erfolgen kann, nur dann durchgeführt wird, wenn keine Beeinträchtigung der Dienste des schurlosen Telekommunikationssystems resultiert. Dazu wird geprüft, ob in der Nebenstellenanlage und insbesondere auch in der Basisstation für den Übertragungsvorgang genügend Ressourcen vorhanden sind. Zudem erfolgt die Übertragung der Betriebsprogramme über einen freien Steuerkanal, so dass die Nutzkanäle, insbesondere der Nutzkanal des Mobilfunkendgerätes auch während der Übertragung der Betriebsprogramme für den Aufbau einer kommenden oder gehenden Gesprächsverbindung zur Verfügung steht. Für den Aufbau von Gesprächsverbindungen werden ferner Ressourcen des Signalisationssystems freigehalten.

Vorgänge zur Übertragung von Betriebsprogrammen werden gegenüber den weiteren Diensten des schnurlosen Telekommunikationssystems zudem mit tieferer Priorität behandelt, so dass bei knappen Ressourcen für den Aufbau einer Gesprächsverbindung gegebenenfalls eine Übertragung von Betriebsprogrammen abgebrochen wird.

In einer vorzugsweisen Ausgestaltung der Erfindung werden zudem allfällige Übertragungsfehler, die beispielsweise bei der Prüfung des geladenen Betriebsprogramms festgestellt werden, und gegebenenfalls auch der Status des Mobilfunkendgerätes erfasst. Diese Massnahmen erlauben, fehlerhafte Mobilfunkendgeräte zu registrieren und wiederholte Übertragungsversuche zu vermeiden. Stattdessen können diesen Mobilendgeräten bereits bei der Anmeldung entsprechende Fehler- oder Störungsmeldungen zugesandt werden.

Das schnurlose Telekommunikationssystem arbeitet vorzugsweise nach den DECT-Standards. Betriebsprogramme werden darin über die C-Plane der DECT-Protokollarchitektur zu den Mobilfunkendgeräten übertragen. Vorzugsweise erfolgt die Übertragung der Betriebsprogramme über eine verbindungsorientierte, paketvermittelnde Punkt-Punkt Verbindung des Meldungsdienstes COMS, die rasch auf- und wieder abgebaut werden kann. Für den Verbindungsaufbau wird zudem keine Funktion des Call Control Moduls CC benötigt, so dass der Aufbau von Verbindungen während dem Datentransfer über die Punkt-Punkt Verbindung des Meldungsdienstes COMS weiter möglich ist.

Nachfolgend wird die Erfindung anhand von Zeichnungen näher erläutert. Dabei zeigt :
- Fig. 1: ein schnurloses Telekommunikationssystem mit einer erfindungsgemässen Vermittlungsstelle VST;
- Fig. 2: die vollständige Protokollarchitektur gemäss DECT-Standard, die eine C-Plane und eine U-Plane aufweist;
- Fig. 3: die mit einer Interworking Einheit IWU verbundene Netzwerkschicht NWK der Protokollarchitektur gemäss DECT-Standard;
- Fig. 4: schematisch eine erfindungsgemässe Übertragung von Daten über die C-Plane der DECT-Protokollarchitektur von einer Datenbank DB des Festteils FT des schnurlosen Telekommunikationssystems zu einer Speichereinheit FLM des mobilen Teils PT des schnurlosen Telekommunikationssystems;
- Fig. 5: den Aufbau eines Mobilendgerätes PHS;
- Fig. 6: den Ablauf der Anmeldung eines Mobilfunkendgerätes PHSh1 bei der Vermittlungsstelle VST;
- Fig. 7: die wesentlichen Funktionsteile eines in der Vermittlungsstelle VST vorgesehenen Moduls DCF, welches zur Steuerung des Ablaufs der Aufdatierung der Mobilfunkendgeräte PHS dient;
- Fig. 8: den erfindungsgemässen Verfahrensablauf nach dem Eintreffen eines Antrags für den Aufbau einer Verbindung zu einem Mobilfunkendgerät PHSh1;
- Fig. 9: den Ablauf zur Aufdatierung der Mobilfunkendgeräte PHS im Detail und
- Fig. 10: eine Statustabelle DL-TAB mit registrierten Mobilfunkendgeräten.

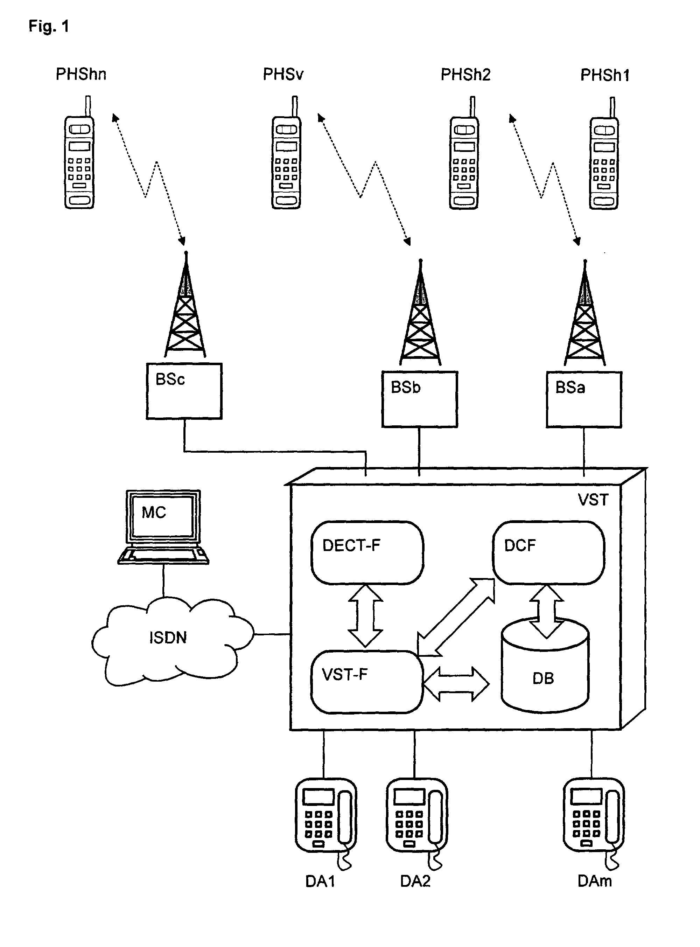

Fig. 1 zeigt ein erfindungsgemässes schnurloses Telekommunikationssystem mit einer Vermittlungsstelle VST, die mit dem öffentlichen Telekommunikationsnetz, beispielsweise dem ISDN (Integrated Services Digital Network), mit schnurgebundenen Endgeräten DA1, DA2, ..., DAm sowie mit Basisstationen BSa, BSb und BSc verbunden ist, über die Funkverbindungen zu schnurlosen Mobilfunkendgeräten PHSh1, PHSh2, ..., PHShn sowie PHSv erstellt werden können.

Die Vermittlungsstelle VST weist in schematischer Darstellung ein Modul VST-F mit Vermittlungsfunktionen sowie ein Modul DECT-F auf, in dem Funktionen des Cordless Systems zusammengefasst sind. Ferner sind eine Datenbank DB mit Teilnehmerinformationen und Betriebsdaten sowie ein Modul DCF vorgesehen, welches zur erfindungsgemässen Steuerung der Übertragung von Betriebsdaten bzw. Betriebsprogrammen an die der Vermittlungsstelle VST zugeordneten Mobilfunkendgeräte PHSh1, ..., PHShn dient.

Das weitere in Fig. 1 gezeigte Mobilfunkendgerät PHSv repräsentiert Endgeräte, die entweder von der Vermittlungsstelle nicht verwaltet und aufdatiert werden oder die nicht über die Luftschnittstelle bzw. nicht mittels einer Funkverbindung aufdatiert werden können.

Die Mobilfunkendgeräte PHSh1, ..., PHShn enthalten, wie in Fig. 5 gezeigt, elektrisch lösch- und wieder beschreibbare, nichtflüchtige bzw. nicht volatile Speichereinheiten FLM, beispielsweise Flash Speicher, wie sie in [8], Richard C. Dorf, THE ELECTRICAL ENGINEERING HANDBOOK, Kapitel 80, Seite 1810 beschrieben sind. Flash Speicher bilden eine Gruppe von elektrisch löschbaren und wieder programmierbaren Speichern (EEPROM), die Speicherzellen mit nur einem Transistor aufweisen. Im Gegensatz zu EEPROMs werden Speicherbereiche in Flash Speichern nicht bitweise, sondern blockweise gelöscht. Es werden vorzugsweise Flash Speicher verwendet. Weitere elektrisch löschbare und wieder programmierbare Speicher sind jedoch ebenfalls vorteilhaft einsetzbar.

Ein Mobilfunkendgerät PHSh weist nur eine Speichereinheit FLM mit wenigstens zwei zur Aufnahme von Betriebsprogrammen dienenden Speicherbereichen FLM-A, FLM-B, FLM-C auf, so dass beispielsweise während des Ladens einer neuen Version eines Betriebsprogramms in den Speicherbereich FLM-A ein lauffähiges Betriebsprogramm im Speicherbereich FLM-B verwendet werden kann. Möglich ist das Laden und die alternative Verwendung mehrer aktueller Betriebsprogramme. Beispielsweise sind in den Speicherbereichen FLM-A und FLM-B Betriebsprogramme für die Kommunikation mit unterschiedlichen Nebenstellenanlagen und im Speicherbereich FLM-C ein Betriebsprogramm für die Kommunikation mit einer öffentlichen Teilnehmervermittlungsstelle vorgesehen.

Neue Versionen von Betriebsprogrammen für die Vermittlungsstelle VST und/oder die Mobilfunkendgeräte PHSh1, ..., PHShn werden von einem Unterhaltszentrum MC beispielsweise über das öffentliche Kommunikationsnetz ISDN oder das Internet zur Vermittlungsstelle VST übertragen. Möglich ist ferner der direkte Anschluss des Unterhaltszentrums MC an die Vermittlungsstelle VST.

Die Verbindung einer als Nebenstellenanlage (Private Branch Exchange) dienenden Vermittlungsstelle mit einer Teilnehmervermittlungsstelle des öffentlichen ISDN-Netzes sowie mit digitalen und analogen schnurgebundenen Endgeräten ist in [4], Peter Bocker, ISDN-Digitale Netze für Sprach-, Text-, Daten-, Video- und Multimediakommunikation, Springer Verlag, Heidelberg 1997, 4. Auflage, Seiten 180-186 beschrieben. Der Aufbau von Nebenstellenanlagen und Teilnehmervermittlungsstellen ist in [4], auf Seite 182 und Seite 212 gezeigt.

Das schnurlose, vorzugsweise nach den DECT-Standards (siehe [5], Digital European Cordless Telecommunications (DECT), ETSI Standard ETS 300 175-1, Seiten 7 und 8) arbeitende Telekommunikationssystem wird durch einen in der Vermittlungsstelle VST realisierten festen Systemteil und die in den Mobilfunkendgeräten PHSh1, PHSh2, ..., PHSn sowie PHSv realisierten portablen Systemteile gebildet. Der feste sowie die portablen Systemteile können als an S-Schnittstellen angeschlossene ISDN Endeinrichtungen TE1 betrachtet werden, wodurch eine einfache Anbindung des schnurlosen Telekommunikationssystems über eine Nebenstellenanlage an das öffentliche Kommunikationsnetz bzw. an das ISDN möglich ist. Die Anpassung der vier Schichten der DECT-Protokollarchitektur an die unteren drei Schichten der ISDN Protokollarchitektur gemäss ISO OSI Modell ist aus [1], Seiten 1313 und 1314 ersichtlich.

Das DECT-System verwendet FDMA- (frequency division multiple access), TDMA- (time division multiple access) sowie TDD- (time division duplex) Verfahren für die Übertragung. Im Frequenzbereich von 1880 MHz bis 1900 MHz sind zehn Kanäle vorgesehen. Über jeden Kanal werden DECT-Rahmen mit einer Länge von 10 ms übertragen, die für jede Übertragungsrichtung (Basisstation an Mobilendgerät sowie Mobilendgerät an Basisstation) je 12, insgesamt also 24 DECT-Slots (Zeitschlitze) mit je 424 Bits aufweisen. Möglich ist auch eine Reduktion der Anzahl der verwendeten Zeitschlitze beispielsweise auf sechs, wodurch das System weniger stark beansprucht wird.

Jeder DECT-Slot weist 32 Synchronisationsbits, 4 Kollisionsdetektionsbits, ein 40 Bit langes A-Feld, einen zusätzlichen A-Feld Kopf mit 8 Bits, eine A-Feld Checksumme mit 16 Bits sowie ein 320 Bit langes B-Feld und eine B-Feld Checksumme mit 4 Bit auf. Im A-Feld sind Steuerdaten und im B-Feld sind Daten von Gesprächen oder weiteren Diensten enthalten.

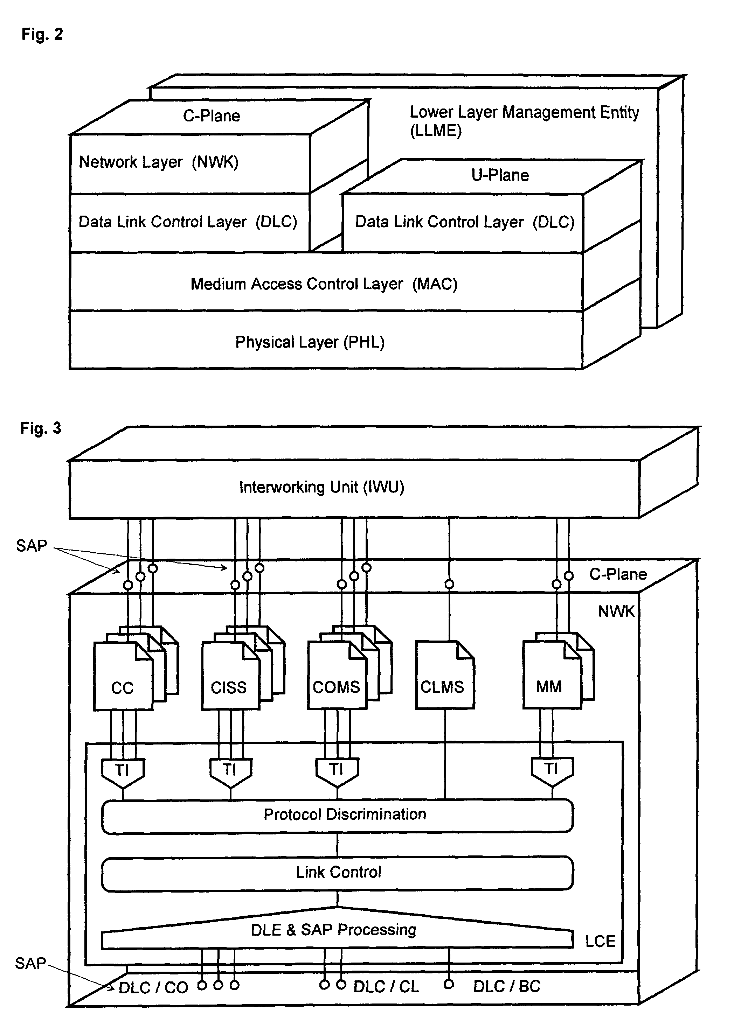

Für die Übertragung der Daten des A- und des B-Feldes werden die untersten beiden Schichten, die Bitübertragungsschicht (Physical Layer) und die für die Mehrfachszugriffskontrolle vorgesehene MAC- (Medium Access Control) Schicht, der in Fig. 2 gezeigten DECT-Protokollarchitektur gemeinsam benutzt. Die Steuerdaten des A-Feldes werden in den höheren Schichten in der sogenannten C-Plane, die eine Sicherungsschicht DLC (Data Link Control) und eine Vermittlungsschicht NWK (siehe Fig. 3) aufweist und die Nutzdaten in den höheren Schichten in der sogenannten U-Plane übertragen, die eine Sicherungsschicht DLC (Data Link Control) aufweist. In Fig. 2 ist ferner die Lower Layer Management Entity LLME dargestellt, welche die Prozesse der genannten Schichten koordiniert und steuert.

Die erfindungsgemässe Übertragung von Betriebsdaten bzw. Betriebsprogrammen, die, wie in Fig. 4 gezeigt, über einen Steuerkanal bzw. die C-Plane der DECT-Protokollarchitektur erfolgt, wird nachstehend näher erläutert.

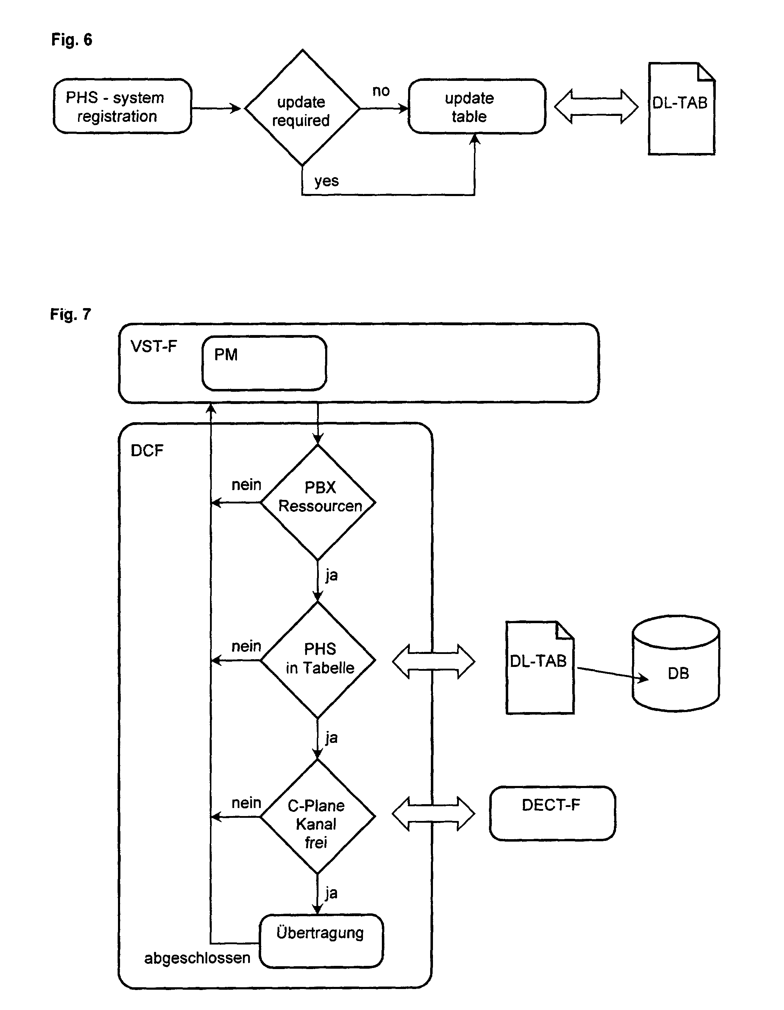

Mobilfunkendgeräte PHSh1, ..., PHShn senden bei jedem Einschalten, Anmelden, Wiedereintreten in den versorgten Bereich, bei Neustart der Vermittlungsstelle VST, oder nach Service Eingriffen und Software Aktualisierungen den aktuellen Stand der in den Speicherbereichen FLM-A, FLM-B und FLM-C gespeicherten Betriebsprogramme an die Vermittlungsstelle VST. Wie in Fig. 6 gezeigt, werden die empfangenen Daten nach der Anmeldung eines Mobilfunkendgerätes PHS von einem Steuermodul PM der Vermittlungsstelle VST geprüft und in eine Statustabelle DL-TAB eingetragen.

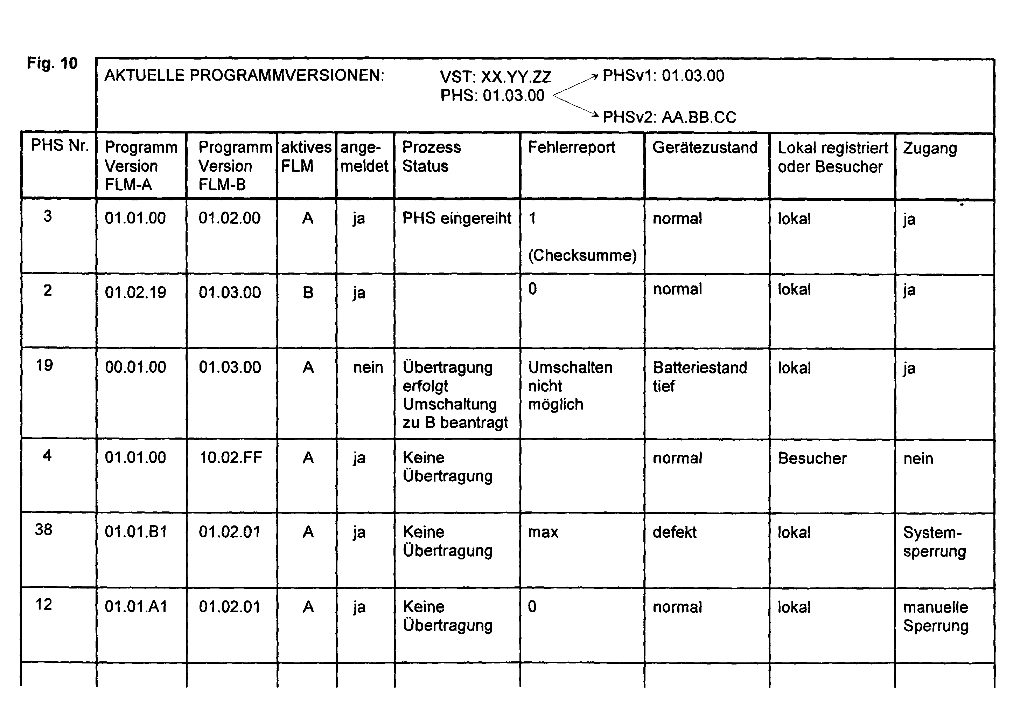

Die Statustabelle DL-TAB umfasst für jedes registrierte Mobilfunkendgerät PHS wenigstens die Kennnummer, die Versionen der gespeicherten Betriebsprogramme und die Angabe des aktiven Betriebsprogramms. In der in Fig. 10 gezeigten Statustabelle sind zusätzlich der Anmeldestatus, der Status des Aufdatierungsprozesses, während des Aufdatierungsprozesses aufgetretene Fehler, festgestellte Gerätefehler, die Netzzugehörigkeit sowie durch den Teilnehmer oder das System erfolgte Sperrungen des Aufdatierungsprozesses aufgezeichnet.

In der Statustabelle DL TAB oder in einem weiteren Speichermedium ist ferner die aktuelle Versionsnummer (siehe Fig. 10, Version 01.03.00) des Betriebsprogramms der Mobilfunkendgeräte PHS aufgelistet. Vorzugsweise wird auch die Versionsnummer des Betriebsprogramms der Vermittlungsstelle VST (siehe Fig. 10, Version XX.YY.ZZ) eingetragen. Möglicherweise sind mehrere aktuelle Programmversionen für die Mobilfunkendgeräte PHS vorgesehen. Beispielsweise korrespondiert Version 01.03.00 der Mobilfunkendgeräte PHS zur Version XX.YY.ZZ der Vermittlungsstelle VST.

Aus der Tabelle von Fig. 10 ist ersichtlich, dass bei Mobilfunkendgerät PHS mit Kennnummer 3, das momentan bei der Vermittlungsstelle VST angemeldet und lokal für die Aufdatierung registriert ist, die Version 01.01.00 im Speicher FLM-A aktiv ist. Nach einem Übertragungsversuch wurde ein Fehler registriert (unkorrekte Checksumme) und das Gerät wieder eingereiht bzw. mit einer neuen Laufnummer versehen.

Bei der Anmeldung des Mobilfunkendgerätes PHS mit Kennnummer 2 wurde festgestellt, dass dieses im aktiven Speicher FLM-A bereits über die aktuelle Programmversion verfügt. Bei dynamischer Verwaltung wird der Eintrag dieses Mobilfunkendgerätes PHS in der Statustabelle DL-TAB gelöscht. Neu anmeldende Mobilfunkendgeräte PHS, die bereits über die aktuelle Programmversion verfügen werden gegebenenfalls gar nicht in die Statustabelle DL-TAB eingetragen.

Beim momentan nicht angemeldeten Mobilfunkendgerät PHS mit Kennnummer 19 ist die Übertragung der aktuellen Version 01.02.19 in den Speicher FLM-B erfolgt und ein Kommando zur Umschaltung vom aktiven Speicher FLM-A auf den Speicher FLM-B gesendet worden, das noch nicht quittiert wurde. Zudem wurde festgestellt, dass der Batteriestand des Gerätes tief ist.

In der Vermittlungsstelle können diejenigen Mobilfunkendgeräte PHS registriert sein, die aufzudatieren sind. Fremde, das heisst nicht registrierte Mobilfunkendgeräte PHS, die gegebenenfalls nicht aufdatiert werden, sind nachstehend als Besucher bezeichnet. Die Identifikation der Mobilfunkgeräte PHS erfolgt beispielsweise anhand der Rufnummer oder einer Identifikationsnummer. Beim Mobilfunkendgerät PHS mit Kennnummer 4 handelt es sich um einen lokal nicht registrierten Besucher, der nicht zur Aufdatierung vorgesehen ist.

Beim Mobilfunkendgerät PHS mit Kennnummer 38 sind mehrere Übertragungsversuche erfolgt. Nach Überschreiten der maximalen Anzahl von Versuchen wurde das Gerät gesperrt und als defekt registriert.

Das Mobilfunkendgerät PHS mit Kennnummer 12 wurde vom betreffenden Teilnehmer manuell gesperrt.

Die Statustabelle wird von einem Steuermodul PM periodisch geprüft und bei Bedarf wird ein Download- bzw. ein Aufdatierungsvorgang gestartet, dessen wesentliche Schritte in Fig. 7 dargestellt sind. Nach der Aufdatierung eines Mobilfunkendgerätes PHS wird der entsprechende Eintrag in der Statustabelle vorzugsweise gelöscht, so dass bei dieser dynamischen Verwaltung die Statustabelle DL-TAB nach Durchführung aller Aufdatierungen leer ist.

Da die Aufdatierung mit tiefer Priorität abläuft, wird geprüft, ob die Vermittlungsstelle VST über genügend freie Ressourcen, insbesondere über eine ausreichende Rechnerkapazität verfügt. Anschliessend oder vorgängig wird ein Mobilendgerät PHS, das eine Aufdatierung benötigt, aus der Statustabelle DL-TAB ausgelesen. Anschliessend wird festgestellt, ob ein für die Übertragung von Betriebsdaten an ein Mobilfunkendgerät PHS dienender Steuerkanal frei ist.

Sofern die Prüfung erfolgreich war, werden Betriebsdaten über den ausgewählten Steuerkanal zum Mobilfunkendgerät PHS übertragen und dort, gegebenenfalls nach einem vorangehenden Löschvorgang, in den Speicherbereich FLM-A, FLM-B oder FLM-C eingeschrieben, in dem ein zu ersetzendes Betriebsprogramm abgelegt ist. Anschliessend wird das Mobilfunkendgerät PHS veranlasst, auf den aktualisierten Speicherbereich FLM-A, FLM-B oder FLM-C umzuschalten.

Wie oben beschrieben und in Fig. 4 gezeigt, erfolgt die erfindungsgemässe Übertragung von Betriebsdaten in einem DECT-System über die C-Plane bzw. über die Steuerkanäle 1-12 einer Basisstation BS. Einer dieser Steuerkanäle 1-12 bleibt dabei stets für weitere Signalisierungsvorgänge reserviert oder wird durch Abbruch eines Downloads bzw. einer Übertragung von Betriebsdaten frei gemacht, so dass parallel jeweils mehrere Downloads bzw. Übertragungen von Betriebsdaten zu Mobilfunkendgeräten PHSh1, ..., PHShn erfolgen können. Sofern eine Übertragung abgebrochen werden muss, wird die Information in der Statustabelle DL-TAB aktualisiert, so dass das betreffende Mobilfunkendgerät PHS für eine weitere Übertragung der Betriebsdaten vorgesehen wird. Ein Übertragungsfehler wird nicht registriert, da der Abbruch fremd verursacht wurde.

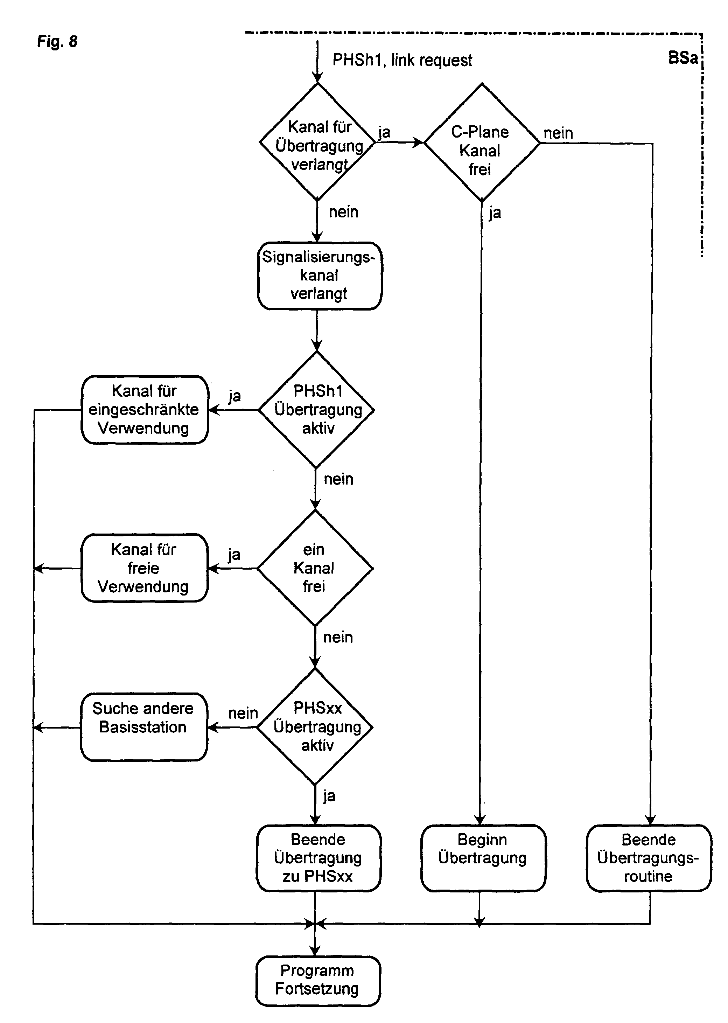

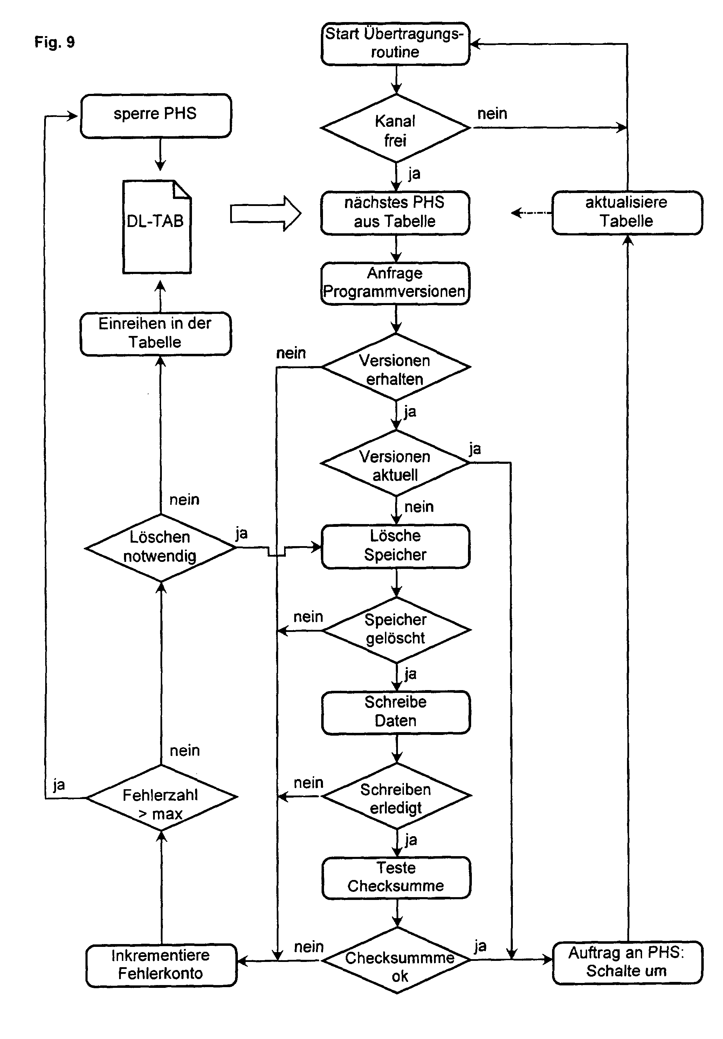

Fig. 8 zeigt den Verfahrensablauf in einer Basisstation BSa nach dem Eintreffen eines Antrags für den Aufbau einer Verbindung zu einem Mobilfunkendgerät PHSh1. Zuerst wird festgestellt, ob die Verbindung für die erfindungsgemässe Übertragung von Betriebsdaten angefordert wurde, deren Ablauf anhand von Fig. 9 noch näher erläutert wird. Anschliessend wird festgestellt, ob zum betreffenden Mobilfunkendgerät PHSh1 momentan Betriebsdaten übertragen werden. Sofern dies der Fall ist, kann der Signalisierungskanal vergeben und eingeschränkt genutzt werden. Oben wurde ausgeführt, dass mit jedem DECT-Rahmen in beide Übertragungsrichtungen je 12 DECT-Slots vorgesehen sind, in denen Steuerinformationen übertragen werden können. Für die Übertragung von Betriebsdaten werden nur zu den Mobilfunkendgeräten gehende DECT-Slots verwendet.

Erfindungsgemäss kann über die U-Plane daher auch dann eine Gesprächsverbindung aufgebaut werden, wenn bereits eine Übertragung von Betriebsdaten durchgeführt wird, da Signalisierungsinformationen, z.B. ein CALL REQUEST, vom betreffenden Mobilfunkendgerät PHS über die freien DECT-Slots zur Vermittlungsstelle VST gesandt werden können. Umgekehrt kann die Übertragung von Betriebsdaten auch dann gestartet werden, wenn über die U-Plane bereits eine Gesprächsverbindung aufgebaut ist.

Sofern momentan keine Übertragung von Betriebsdaten erfolgt und ein Signalisierungskanal frei ist, wird dieser zur freien Verfügung vergeben. Sofern kein Signalisierungskanal frei ist, wird festgestellt, ob Betriebsdaten zu einem anderen Mobilfunkendgerät PHSxx übertragen werden. Ist dies der Fall so wird die Übertragung von Betriebsdaten zum Mobilfunkendgerät PHSxx abgebrochen und der frei werdende Signalisierungskanal dem Mobilfunkendgerät PHSh1 für den Aufbau einer Gesprächsverbindung übergeben. Andernfalls ist der Verbindungsaufbau nur über eine andere, noch freie Kapazität aufweisende Basisstation BS möglich.

Die Meldung über den Belegungszustand der Signalisierungskanäle erfolgt durch die in Fig. 2 gezeigte Lower Layer Management Entity LLME.

In Fig. 3 ist gezeigt, dass für die Übertragung von Signalisierungsdaten in der C-Plane verschiedene Übertragungsdienste und entsprechende von der Lower Layer Management Entity LLME gesteuerte Entities CC, CISS, COMS, CLMS und MM vorgesehen sind, die über Service Access Punkte SAP mit einer Interworking Unit IWU verbunden sind. Zum Aufbau von Verbindungen dient die Call Control Entity CC. Die Call Independent Supplementary Services Entity CISS unterstützt gesprächsunabhängige Dienste. Die Connection Oriented Message Service Entity COMS erlaubt den Aufbau von Punkt-Punkt Verbindungen für verbindungsorientierte Paketvermittlung. Die Connectionless Message Service Entity CLMS unterstützt die verbindungslose Übertragung von Meldungen und die Mobility Management Entity MM unterstützt den örtlichen Wechsel zu weiteren Funksystemen. Der Aufbau, Betrieb und Abbau von C-Plane Verbindungen zwischen den festen und portablen Endpunkten erfolgt mittels der Link Control Entity LCE, die Transaction Identification, Protocol Discrimination, Link Control und Data Link Endpoint und SAP Processing Entities aufweist (siehe [6], Seiten 23 und 24).

Besonders vorteilhaft erfolgt die erfindungsgemässe Übertragung von Betriebsdaten über die C-Plane, Peer to Peer, zwischen einer COMS Entity in der Vermittlungsstelle und einer COMS Entity im betreffenden Mobilendgerät PHS. Einerseits wird bei der Verwendung des Meldungsdienstes COMS die Call Control Entity CC für deren Aufgaben frei gelassen; andererseits wird der Auf- und Abbau von Verbindungen durch den Meldungsdienst COMS jeweils schnell vollzogen, so dass keine Verzögerungen beim Aufbau von Gesprächsverbindungen entstehen können. Weiterhin verwendet die COMS Entity den Class A Dienst der DLC Schicht, der eine schnelle Datenübertragung erlaubt (siehe [7], Seite 42). Die COMS Entity lenkt Interworking Unit Meldungen, welche für die Übertragung von Betriebsdaten erforderlich sind, über die Interworking Unit IWU zu den höheren Schichten, beispielsweise zu der in Fig. 4 gezeigten Download Application DAP, wo sie abgearbeitet werden.

Die erfindungsgemässe Lösung ist besonders einfach da das COMS Protokoll lediglich vereinfacht wird, so dass Rückmeldungs- und Bestätigungsmeldungen nicht benutzt werden. Die Meldungen werden nur auf der Anwendungsebene bestätigt. Nach Abschluss der Übertragung wird die korrekte Programmierung durch Kontrolle der Checksumme des fertig programmierten Betriebsprogramms geprüft. Daraus resultiert eine einfachere und schnellere Kommunikation.

Ein vorzugsweiser Ablauf des erfindungsgemässen Verfahrens zur Übertragung von Betriebsdaten an Mobilfunkendgeräte PHSh1, ..., PHShn wird anhand von Fig. 9 noch einmal im Detail erläutert. Das Steuermodul PM der Vermittlungsstelle VST startet die Übertragungsroutine, durch die festgestellt wird, ob ein Steuerkanal für die Übertragung frei ist. Sofern dies der Fall ist, wird aus der Statustabelle DL-TAB das nächste Mobilfunkendgerät PHS ausgewählt, dessen Programmversionen geprüft und mit einer oder mehreren aktuellen Programmversionen verglichen. Sofern das Mobilfunkendgerät PHS eine aktuelle Programmversion aufweist, wird es veranlasst, auf den Speicherbereich FLM-A oder FLM-B mit dem aktuellen Programm umzuschalten. Sofern keine aktuelle Programmversion gespeichert ist, wird ein eine nicht mehr aktuelle Programmversion enthaltender Speicherbereich FLM-A oder FLM-B gelöscht und mit den Daten eines neuen Betriebsprogramms überschrieben, das anschliessend durch Testen der Checksumme geprüft wird. Nach korrekter Übertragung wird das Mobilfunkendgerät PHS veranlasst auf das neu geladene Betriebsprogramm umzuschalten. Ferner wird der neue Stand der Programmversionen in der Statusliste DL-TAB registriert bzw. bei dynamischer Verwaltung der Statustabelle der entsprechende Eintrag gelöscht.

Sofern beim Auslesen der Programmversionen, beim Löschen oder Beschreiben des Speicherbereichs FLM-A oder FLM-B oder beim Testen der Checksumme ein Fehler aufgetreten ist, wird das Fehlerkonto inkrementiert und die Übertragungsroutine beim entsprechenden Vorgang abgebrochen. Sofern die registrierte Fehlerzahl ein vorgegebenes Maximum überschritten hat, wird das betreffende Mobilfunkendgerät PHS in der Liste als gesperrt registriert. Andernfalls wird es, gegebenenfalls nach einem weiteren Versuch zu Löschung des zu beschreibenden Speicherbereichs FLM-A oder FLM-B, wieder in der Statustabelle DL-TAB eingereiht, bzw. mit einer neuen Laufnummer versehen.

Anstelle von zwei Speicherbereichen FLM-A und FLM-B können mehrere weitere Speicherbereiche FLM-C, ... in den beschriebenen Download- oder Übertragungsprozess eingebunden werden. Wie einleitend erwähnt, ist die Verwendung eines einzelnen Speichers FLM mit wenigstens zwei programmierbaren Speicherbereichen FLM-A, FLM-B besonders vorteilhaft.

Der verwendete Speicher FLM ist nichtflüchtig, löschbar und wieder programmierbar. Wie oben erwähnt wird vorzugsweise ein Flash Speicher, beispielsweise vom Typ Am29DL400B von AMD verwendet.

Mindestens ein lauffähiges Betriebsprogramm A oder B muss in einem der Speicherbereiche FLM-A oder FLM-B vorhanden sein, sonst kann die Aufdatierung des betreffenden Mobilendgerätes PHS nicht durchgeführt werden. Mit dem Betriebsprogramm A kann das Programm B gelöscht und mittels einem Downloadvorgang über die Luftschnittstelle durch ein neues Betriebsprogramm ersetzt werden. Mit dem Betriebsprogramm B kann das Programm A gelöscht und durch ein neues Betriebsprogramm ersetzt werden.

In einem gegen Löschen und Überschreiben geschützten Speicherbereich vorzugsweise des Speichers FLM oder eines weiteren Speichermoduls ist ferner ein Startprogramm (Bootstrap) vorgesehen, mittels dem über einen drahtgebundenen Direktanschluss die Betriebsprogramme A, B ersetzt werden können. Ferner sind vorzugsweise ebenfalls im Speicher FLM benutzer- oder gerätespezifische Daten speicherbar, die durch das jeweils aktive Betriebsprogramm A oder B und das Startprogramm eingeschrieben werden können.

Das Mobilendgerät PHS weist daher in einem Beispiel nur einen Speicher FLM auf, in dem alle notwendigen Daten und Programme abgelegt sind.

Der Speicher FLM muss ferner einen simultanen Zugriff (simultaneous read/write operations) auf die einzelnen Speicherbereiche unterstützen, so dass jedes in einem Speicherbereich, z.B. FLM-A, laufendes Programm in jedem andern Bereich, z.B. FLM-B und FLM-C, Daten löschen und wieder schreiben kann.

Vorzugsweise sind die verwendeten Betriebsprogramme A, B, ... in bezug auf die verwendeten Speicherbereiche gleich aufgebaut, so dass die entsprechenden Programmteile an gleichen bzw. zueinander korrespondierenden Adressen liegen.

Sofern der Speicher FLM zwei oder mehrere gleichgrosse Speicherbereiche aufweist, die zur Aufnahme der Betriebsprogramme geeignet sind, können diese Bereiche wie folgt adressiert werden:
a) Der Prozessor PROC wählt die Adresse axxxxxx, bxxxxxx, cxxxxxx des Speicherbereiches FLM-A, FLM-B oder FLM-C, der das zu aktivierende Betriebsprogramm enthält. Gemäss Fig. 10 weist das aktuelle Betriebsprogramm die Versionsnummer 01.03.00 auf. Diese Version ist im Mobilfunkendgerät von Fig. 5 im Speicherbereich FLM-A abgelegt. Der Prozessor PROC wählt daher die Adresse axxxxxx. Nachteilig bei diesem Verfahren ist, dass bei beim Schreiben des Betriebsprogramms jeweils die Adressen der Speicherbereiche zu berücksichtigen sind, was mit erheblichem Aufwand verbunden ist.
b) In einem Beispiel werden vom Prozessor PROC daher immer die gleichen Adressen xxxxxx verwendet, wobei höherwertige Adressbits a, b oder c, die zur Wahl des Speicherbereichs dienen, über Steuerleitungen a, b, c gesetzt werden. Zur Aktivierung des aktuellen Betriebsprogramms im Speicherbereich FLM-A wird die vom Prozessor PROC ausgegebene Adresse xxxxxx durch den höherwertigen Adressteil a ergänzt, wodurch der Speicherbereich FLM-A mittels der Adresse axxxxxx korrekt adressiert wird.

Bekannte Flash Speicher (beispielsweise auch der obengenannte Baustein Am29DL400B) weisen zudem oft Sektoren bzw. Speicherbereiche unterschiedlicher Grösse auf, so dass eine einfache und effiziente Nutzung des Bausteins in verschiedenen Fällen nicht möglich ist. Falls ein Speicherbereich zur Aufnahme eines Betriebsprogramms nicht genügt, muss daher ein grösserer und entsprechend teurerer Flash Speicher gewählt werden. Zur Vermeidung dieses Problems, werden die Adressen oder Adressleitungen für die Ansteuerung des Speichers so vertauscht, dass mehrere gleichgrosse Speicherbereiche gebildet werden, in denen gegebenenfalls mehrere kleinere Sektoren zusammengefasst sind. Das Vertauschen der Adressleitungen ist in Fig. 5 symbolisch durch die Zone abm dargestellt. Möglich ist ferner eine indirekte Adressierung, bei der den vom Prozessor PROC gewählten Adressen die tatsächliche Adresse im Flash Speicher zugeordnet wird.

Aus der Sicht des Programmierers liegt daher ein Flash Speicher mit einheitlichen Speicherbereichen FLM-A, FLM-B, ... vor, die in der oben beschriebenen Weise adressiert werden können.

Fig. 5 zeigt den Aufbau eines Mobilfunkendgerätes PHS, dessen Aufbau mit Ausnahme der Speicherorganisation, aus [1], Seite 1309 bekannt ist. Das gezeigte Mobilfunkendgerät PHS weist einen Basisbandteil mit Audio CODEC und Modulator ADPCM sowie einen Hochfrequenzteil mit Shift Keying Modulator GMSK, Synthesizer SYNTH, Sender TX, Empfänger RX und Umschalter F/SW auf. Ferner ist eine mit einer Tastatur und einer Anzeige K/D verbundene Prozessoreinheit PROC vorgesehen, die über einen Adressbus ad und einen Datenbus db mit einem flüchtigen Speicher RAM und einem nichtflüchtigen Speicher FLM verbunden ist. Der nichtflüchtige Speicher FLM enthält mehrere Speicherbereiche FLM-A, FLM-B, FLM-X zur Aufnahme von zwei oder mehreren Betriebsprogrammen sowie das Startprogramm und allenfalls weitere nichtflüchtige Daten.

Das Umschalten zwischen den Programmen erfolgt über Steuerleitungen a, b, c, die entsprechend höherwertige Adressbits des Speichers ansteuern, so dass eine identische Adressierung der die Betriebsprogramme enthaltenden Speicherbereiche FLM-A, FLM-B, FLM-C durch den Prozessor PROC erfolgt.

Die Ausgestaltung des Mobilendgerätes PHS ist kostengünstiger realisierbar, da anstelle verschiedener, nur ein einzelner nichtflüchtiger Speicherbaustein FLM verwendet wird. Für die Entwicklung der Software entsteht kein Zusatzaufwand. Zudem ist der Energieverbrauch minimiert, was bei Mobilfunkgeräten PHS von grosser Bedeutung ist.

Das erfindungsgemässe Verfahren kann jedoch auch bei Mobilfunkendgeräten PHS eingesetzt werden, in denen die Speicherbereiche FLM-A, FLM-B und FLM-C in voneinander getrennten Bausteinen angeordnet sind.
[1] Jerry D. Gibson, THE COMMUNICATIONS HANDBOOK, CRC PRESS, Boca Raton 1997
[2] Offenlegungsschrift EP 0 459 344 A1
[3] Offenlegungsschrift EP 0 804 046 A2
[4] Peter Bocker, ISDN-Digitale Netze für Sprach-, Text-, Daten-, Video- und Multimediakommunikation, Springer Verlag, Heidelberg 1997, 4. Auflage
[5] Digital European Cordless Telecommunications (DECT), ETSI European Telecommunication Standard ETS 300 175-1 (Oktober 1992)
[6] Digital European Cordless Telecommunications (DECT), ETSI European Telecommunication Standard ETS 300 175-5 (Dezember 1997)
[7] Digital European Cordless Telecommunications (DECT), ETSI European Telecommunication Standard ETS 300 175-4 (September 1996)
[8] Richard C. Dorf, THE ELECTRICAL ENGINEERING HANDBOOK, 2^{nd} Edition, CRC PRESS, Boca Raton 1997
[9] B. Walke, Mobilfunknetze und ihre Protokolle, Band 2, B.G. Teubner Verlag, Stuttgart 2000, 2. Auflage

## Patentansprüche

1. Verfahren zur Übertragung von Betriebsprogrammen an schnurlose Mobilfunkendgeräte (PHSh1, ..., PHShn), die wenigstens zwei zur Aufnahme der Betriebsprogramme dienende Speicherbereiche (FLM-A, FLM-B, FLM-C) aufweisen, in einem schnurlosen Telekommunikationssystem, innerhalb dem mittels einer Nebenstellenanlage (VST) Verbindungen zu den für den Empfang von Betriebsprogrammen vorgesehenen und zu weiteren schnurlosen Mobilfunkendgeräten (PHSh1, ..., PHShn; PHSv) sowie zu schnurgebundenen Endgeräten (DA1, ..., DAm) aufgebaut werden können,
wobei
a) in der Nebenstellenanlage (VST) eine Statustabelle (DL-TAB) geführt wird, in der für den Empfang von Betriebsprogrammen vorgesehene schnurlose Mobilfunkendgeräte (PHSh1, ..., PHShn) sowie die zugehörige Version des aktiven und gegebenenfalls die Versionen eines oder mehrerer inaktiver Betriebsprogramme registriert werden;
b) das nächste in der Statustabelle (DL-TAB) aufgeführte schnurlose Mobilfunkendgerät (PHSh1), das nicht eine aktuelle Version des Betriebsprogramms aufweist, ausgewählt wird;
c) geprüft wird, ob die Nebenstellenanlage (VST) über genügend Ressourcen für die Übertragung von Betriebsprogramme an ein schnurloses Mobilfunkendgerät (PHSh1, ..., PHShn) verfügt;
d) geprüft wird, ob ein für die Übertragung von Betriebsprogramme an ein schnurloses Mobilfunkendgerät (PHSh1, ..., PHShn) dienender Steuerkanal frei ist und
e) , sofern die Prüfung erfolgreich war, Betriebsprogramme über den freien Steuerkanal zum ausgewählten schnurlosen Mobilfunkendgerät (PHSh1) übertragen und dort gegebenenfalls nach einem Löschvorgang in den Speicherbereich (FLM-A; FLM-B; FLM-C) eingeschrieben werden, in dem ein zu ersetzendes Betriebsprogramm abgelegt ist.

2. Verfahren nach Anspruch 1, **dadurch gekennzeichnet, dass**, gegebenenfalls nach Prüfung des geladenen Betriebsprogramms mittels Versionsnummer und einer Checksumme, zum schnurlosen Mobilfunkendgerät (PHSh1) ein Kommando zum Umschalten auf ein anderes Betriebsprogramm übertragen wird.

3. Verfahren nach Anspruch 1 oder 2, **dadurch gekennzeichnet, dass** die schnurlosen Mobilfunkendgeräte (PHSh1, ..., PHShn) nach jeder Verbindungsaufnahme die Versionen der geladenen Betriebsprogramme und gegebenenfalls den Gerätestatus zur Teilnehmervermittlungsanlage (VST) melden, welche die empfangenen Daten in die Statustabelle (DL-TAB) einträgt und periodisch prüft.

4. Verfahren nach Anspruch 1, 2 oder 3, **dadurch gekennzeichnet, dass** für die Aufnahme einer Gesprächsverbindung eines weiteren schnurlosen Mobilfunkendgerätes (PHSh2, ..., PHShn) die Übertragung von Betriebsprogrammen zum ersten schnurlosen Mobilfunkendgerät (PHSh1) abgebrochen wird, falls kein freier Steuerkanal für die Verbindungsaufnahme vorhanden ist.

5. Verfahren nach Anspruch 1, 2, 3 oder 4, **dadurch gekennzeichnet, dass** nach dem Auftreten von Fehlermeldungen die Übertragung zum ersten schnurlosen schnurlosen Mobilfunkendgerät (PHSh1) abgebrochen und
a) der Eintrag des betreffenden schnurlosen Mobilfunkendgerätes (PHSh1) an das Ende der Statustabelle (DL-TAB) verschoben wird, sofern eine vorgesehene Anzahl von Übertragungsversuchen nicht überschritten wurde oder
b) dass das betreffende schnurlose Mobilfunkendgerät (PHSh1) in der Statustabelle (DL-TAB) als gesperrt eingetragen wird, sofern eine vorgesehene Anzahl von Übertragungsversuchen überschritten wurde, und dass gegebenenfalls eine entsprechende Störungsmeldung zum betreffenden schnurlosen Mobilfunkendgerät (PHSh1) gesandt wird.

6. Verfahren nach einem der Ansprüche 1-5, **dadurch gekennzeichnet, dass** das schnurlose Telekommunikationssystem nach den DECT-Standards arbeitet und dass die Betriebsprogramme über einen Steuerkanal der C-Plane der DECT-Protokollarchitektur zu den schnurlosen Mobilfunkendgeräten (PHSh1, ..., PHShn) übertragen werden.

7. Verfahren nach Anspruch 6, **dadurch gekennzeichnet, dass** die Betriebsprogramme in der C-Plane über eine verbindungsorientierte, paketvermittelnde Punkt-Punkt Verbindung des Meldungsdienstes COMS übertragen werden.

8. Nebenstellenanlage (VST), mittels der innerhalb eines schnurlosen Telekommunikationssystems Betriebsprogramme an schnurlose Mobilfunkendgeräte (PHSh1, ..., PHShn) übertragen sowie Verbindungen zu den für den Empfang von Betriebsprogrammen vorgesehenen und zu weiteren schnurlosen Mobilfunkendgeräten (PHSh1, ..., PHShn; PHSv) sowie zu schnurgebundenen Endgeräten (DA1, ..., Dam) aufgebaut werden können,
wobei die Nebenstellenanlage
a) eine Datenbank (DB) enthält zur Ablage aktueller Versionen von Betriebsprogrammen sowie einer Statustabelle (DL-TAB) in der für den Empfang von Betriebsprogrammen vorgesehene schnurlose Mobilfunkendgeräte (PHSh1, ..., PHShn) sowie die zugehörige Version des aktiven und gegebenenfalls die Versionen eines oder mehrerer inaktiver Betriebsprogramme registriert werden,
b) ein Steuermodul (PM) enthält, welches
b1) zum Lesen und Aufdatieren der Statustabelle (DL-TAB) und zum Auswählen vom nächsten in der Statustabelle ausgeführten schnurlosen Mobilfunkendgerät, das nicht eine aktuelle Version des Betriebprogramms aufweist,
b2) zur Prüfung der Systemressourcen,
b3) zur Prüfung der Belegung der Steuerkanäle sowie
b4) sofern die Prüfung erfolgreich war, zur entsprechenden Steuerung der Übertragung von Betriebsprogrammen über einen freien Steuerkanal zu dem ausgewählten schnurlosen Mobilfunkendgerät (PHSh1, ..., PHShn) geeignet ist.

9. Nebenstellenanlage (VST) nach Anspruch 8, **dadurch gekennzeichnet, dass** das schnurlose Telekommunikationssystem nach den DECT-Standards arbeitet und dass die Betriebsprogramme über einen Steuerkanal der C-Plane der DECT-Protokollarchitektur zu den schnurlosen Mobilfunkendgeräten (PHSh1, ..., PHShn) übertragbar sind.

10. Nebenstellenanlage (VST) nach Anspruch 9, **dadurch gekennzeichnet, dass** die Betriebsprogramme in der C-Plane über eine verbindungsorientierte, paketvermittelnde Punkt-Punkt Verbindung des Meldungsdienstes COMS übertragbar sind.

## Claims

1. Method for transferring operating programs to cordless mobile terminals (PHSh1, ..., PHShn), which comprise at least two memory ranges (FLM-A, FLM-B, FLM-C) for storing the operating programs, in a cordless telecommunication system, in which, by means of a private branch exchange (VST), connections can be setup to the cordless mobile terminals (PHSh1, ..., PHShn; PHSv), that are arranged for the receipt of operating programs and to others, as well as to corded terminals (DA1, ..., DAm), wherein
a) a status table (DL-TAB) is maintained in the private branch exchange (VST), in which cordless mobile terminals (PHSh1, ..., PHShn), planned for the receipt of operating programs, as well as the related version of the active and, if appropriate, the versions of one or more inactive operating programs are registered;
b) the next cordless mobile terminal (PHSh1) listed in the status table (DL-TAB), which does not comprise a current version of the operating program, is selected;
c) it is checked, whether the private branch exchange (VST) disposes over sufficient resources for the transfer of operating programs to a cordless mobile terminal (PHSh1, ..., PHShn);
d) it is checked, whether a control channel is free, that serves for the transfer of operating programs to a cordless mobile terminal (PHSh1, ..., PHShn) and
e) , if the check was successful, operating programs are transferred over the free control channel to the selected cordless mobile terminal (PHSh1), and there, if appropriate after an erasure process, written into the memory range (FLM-A; FLM-B; FLM-C), in which an operating program is stored, that requires replacement.

2. Method according to claim 1, **characterised in, that**, if appropriate after testing of the loaded operating program by means of version number and a check sum, a command for switching to another operating program is transferred to the cordless mobile terminal (PHSh1).

3. Method according to claim 1 or 2, **characterised in, that** the cordless mobile terminals (PHSh1, ..., PHShn) report after each setup of a connection the versions of the loaded operating programs and, if appropriate the terminal status, to the private branch exchange (VST), which enters the received data into the status table (DL-TAB) and periodically examines.

4. Method according to claim 1, 2 or 3, **characterised in, that** for the setup of a speech connection of another cordless mobile terminal (PHSh2, ..., PHShn) the transfer of operating programs to the first cordless mobile terminal (PHSh1) is aborted, if no free control channel is available for the setup of the connection.

5. Method according to claim 1, 2, 3 or 4, **characterised in, that** after the appearance of error messages the transfer to the first cordless mobile terminal (PHSh1) is aborted and
a) the entry of the concerned cordless mobile terminal (PHSh1) is shifted to the end of the status table (DL-TAB), if s pre-set number of transfer-trials was not exceeded, or
b) that the concerned cordless mobile terminal (PHSh1) is registered as blocked in the status table, if s pre-set number of transfer-trials was exceeded, and that a corresponding error message is sent to the concerned cordless mobile terminal (PHSh1).

6. Method according to one of the claims 1 to 5, **characterised in, that** the cordless telecommunication system operates according to the DECT-standards and that the operating programs are transferred over the control channel of the C-Plane of the DECT-protocol architecture to the cordless mobile terminals (PHSh1, ..., PHShn).

7. Method according to claim 6, **characterised in, that** the operating programs are transferred in the C-Plane across a connection oriented, packet switching point-point connection of the message service COMS.

8. Private branch exchange (VST), by means of which operating programs can be transferred within a cordless telecommunication system to cordless mobile terminals (PHSh1, ..., PHShn) and connections can be setup to the cordless mobile terminals (PHSh1, ..., PHShn; PHSv), that are arranged for the receipt of operating programs and to others, as well as to corded terminals (DA1, ..., DAm), wherein the private branch exchange
a) comprises a database (DB) for storing current versions of operating programs as well as a status table (DL-TAB), in which cordless mobile terminals (PHSh1, ..., PHShn) planned for the receipt of operating programs, as well as the related version of the active and, if appropriate, the versions of one or more inactive operating programs are registered,
b) comprises a control module (PM), which is capable of
b1) reading and updating the status table (DL-TAB) and selecting the next cordless mobile terminal listed in the status table (DL-TAB), which does not comprise a current version of the operating program,
b2) checking the system resources,
b3) checking the occupation of the control channels, as well as
b4) , if the check was successful, correspondingly controlling the transfer of operating programs over a free control channel to the selected cordless mobile terminal (PHSh1, ..., PHShn).

9. Private branch exchange (VST)according to claim 8, **characterised in, that** the cordless telecommunication system operates according to the DECT-standards and that the operating programs are transferable over the control channel of the C-Plane of the DECT-protocol architecture to the cordless mobile terminals (PHSh1, ..., PHShn).

10. Private branch exchange (VST)according to claim 9, **characterised in, that** the operating programs are transferable in the C-Plane across a connection oriented, packet switching point-point connection of the message service COMS.

## Revendications

1. Procédé de transmission de programmes de service à des terminaux téléphoniques mobiles sans fil (PHSh1, ..., PHShn) qui comprennent au moins deux zones de mémoire (FLM-A, FLM-B, FLM-C) utilisées pour l'enregistrement des programmes de service, dans un système de télécommunications sans fil à l'intérieur duquel des liaisons peuvent être établies au moyen d'une installation automatique d'abonné (VST) vers les terminaux téléphoniques mobiles sans fil prévus pour la réception des programmes de service et vers d'autres terminaux téléphoniques mobiles sans fil (PHSh1, ..., PHShn ; PHSv), ainsi que vers des terminaux à fil (DA1, ..., DAm), dans lequel
a) dans l'installation automatique d'abonné (VST) est exécuté un tableau d'état (DL-TAB) dans lequel sont enregistrés des terminaux téléphoniques mobiles sans fil (PHSh1, ..., PHShn) prévus pour la réception des programmes de service, ainsi que la version correspondante du programme de service actif et le cas échéant les versions d'un ou de plusieurs programmes de service inactifs ;
b) le terminal téléphonique mobile sans fil suivant (PHSh1) mentionné dans le tableau d'état (DL-TAB), qui ne comprend pas une version actuelle du programme de service, est sélectionné ;
c) il est vérifié si l'installation automatique d'abonné (VST) dispose de ressources suffisantes pour la transmission des programmes de service à un terminal téléphonique mobile sans fil (PHSh1, ..., PHShn) ;
d) il est vérifié si un canal de commande utilisé pour la transmission de programmes de service à un terminal téléphonique mobile sans fil (PHSh1, ..., PHShn) est libre, et
e) dans la mesure où la vérification a abouti, les programmes de service sont transmis via le canal de commande libre au terminal téléphonique mobile sans fil sélectionné (PHSh1), et y sont enregistrés le cas échéant après un processus d'effacement dans la zone de mémoire (FLM-A ; FLM-B ; FLM-C) dans laquelle est rangé un programme de service à remplacer.

2. Procédé selon la revendication 1, **caractérisé en ce que**, le cas échéant après vérification des programmes de service chargés au moyen du numéro de version et d'une somme de contrôle, une commande de commutation vers un autre programme de service est transmise au terminal téléphonique mobile sans fil (PHSh1).

3. Procédé selon la revendication 1 ou 2, **caractérisé en ce que** les terminaux téléphoniques mobiles sans fil (PHSh1, ..., PHShn) communiquent, après chaque enregistrement de liaison, les versions des programmes de service chargés et le cas échéant l'état de l'appareil à l'équipement de commutation d'abonné (VST), lequel enregistre les données reçues dans le tableau d'état (DL-TAB) et les vérifie périodiquement.

4. Procédé selon la revendication 1, 2 ou 3, **caractérisé en ce que** pour l'établissement d'une liaison téléphonique d'un autre terminal téléphonique mobile sans fil (PHSh2, ..., PHShn) la transmission de programmes de service au terminal téléphonique mobile sans fil (PHSh1) est interrompue, au cas où aucun canal de commande disponible n'existe pour la réception de liaison.

5. Procédé selon la revendication 1, 2, 3 ou 4, **caractérisé en ce que**, après l'apparition de messages d'erreur, la transmission au premier terminal téléphonique mobile sans fil (PHSh1) est interrompue, et
a) l'entrée du terminal téléphonique mobile sans fil concerné (PHSh1) est décalée à l'extrémité du tableau d'état (DL-TAB), dans la mesure où un nombre prévu d'essais de transmission n'a pas été dépassé ou
b) que le terminal téléphonique mobile sans fil concerné (PHSh1) est entré à l'état verrouillé dans le tableau d'état (DL-TAB), dans la mesure où un nombre prévu d'essais de transmission a été dépassé, et qu'un message de dérangement correspondant est le cas échéant transmis au terminal téléphonique mobile sans fil concerné (PHSh1).

6. Procédé selon l'une des revendications 1 à 5, **caractérisé en ce que** le système de télécommunications sans fil fonctionne selon les normes DECT, et que les programmes de service sont transmis via un canal de commande du plan C de l'architecture de protocole DECT aux terminaux téléphoniques mobiles sans fil (PHSh1, ..., PHShn).

7. Procédé selon la revendication 6, **caractérisé en ce que** les programmes de service dans le plan C sont transmis via une liaison de point à point du service de message COMS commutée par paquets, orientée en liaison.

8. Installation automatique d'abonné (VST) au moyen de laquelle, à l'intérieur d'un système de télécommunications sans fil, des programmes de service peuvent être transmis à des terminaux téléphoniques mobiles sans fil (PHSh1, ..., PHShn) et des liaisons peuvent être établies vers les terminaux téléphoniques mobiles sans fil prévus pour la réception des programmes de service et vers d'autres terminaux téléphoniques mobiles sans fil (PHSh1, ..., PHShn ; PHSv), ainsi que vers des terminaux à fil (DA1, ..., Dam), dans laquelle l'installation automatique d'abonné
a) contient une base de données (DB) pour le rangement de versions actuelles de programmes de service, ainsi qu'un tableau d'état (DL-TAB) dans lequel sont enregistrés des terminaux téléphoniques mobiles sans fil (PHSh1, ..., PHShn) prévus pour la réception de programmes de service, ainsi que la version correspondante du programme de service actif et le cas échéant les versions d'un ou de plusieurs programmes de service inactifs,
b) contient un module de commande (PM), qui est adapté
b1) pour la lecture et la datation du tableau d'état (DL-TAB) et pour la sélection du terminal téléphonique mobile suivant mentionné dans le tableau d'état, qui ne comporte pas une version actuelle du programme de service,
b2) pour la vérification des ressources système,
b3) pour la vérification de l'occupation des canaux de commande, ainsi que
b4) dans la mesure où la vérification a abouti, pour la commande correspondante de la transmission de programmes de service, via un canal de commande libre, au terminal téléphonique mobile sans fil sélectionné (PHSh1, ..., PHShn).

9. Installation automatique d'abonné (VST) selon la revendication 8, **caractérisée en ce que** le système de télécommunications sans fil travaille selon les normes DECT et que les programmes de service sont transmissibles via un canal de commande du plan C de l'architecture de protocole DECT aux terminaux téléphoniques mobiles sans fil (PHSh1, ..., PHShn).

10. Installation automatique d'abonné (VST) selon la revendication 9, **caractérisée en ce que** les programmes de service sont transmissibles dans le plan C via une liaison de point à point commutée par paquets, orientée en liaison, du service de message COMS.
